# EUROPEAN PATENT SPECIFICATION

(11) **EP 3 690 262 B1**
(45) Date of publication and mention of the grant of the patent: **08.12.2021**
(21) Application number: 19155100.1
(22) Date of filing: 01.02.2019
(51) Int. Cl.: F16B 31/02

(54) **FASTENER ARRANGEMENT FOR ESTABLISHING A SCREW CONNECTION**
BEFESTIGUNGSANORDNUNG ZUM HERSTELLEN EINER SCHRAUBVERBINDUNG
AGENCEMENT DE FIXATION POUR ÉTABLIR UNE CONNEXION DE VIS

(43) Date of publication of application: 05.08.2020
(73) Proprietor: Bossard AG, 6301 Zug (CH)
(72) Inventor: Beer, Florian, 93133 Burglengenfeld (DE); Schneider, Martin, 89075 Ulm (CH)
(74) Representative: Rey, Antje Gabriele

(56) References cited:
- DE-A1- 3 840 417

## Description

### Technical Field

The present invention relates to a fastener arrangement for establishing a screw connection, methods for the manufacturing thereof and the usage of it.

### Background Art

For conventional fastener connections, two or more parts with threaded elements are assembled. For tightening the fastener connection, a torque is applied to the fastener assembly. Such applied torque produces a pre-load force that acts on the bolt of the assembly, such that the individual parts of the assembly are braced against each other.

A reliable fastener connection with a fastener arrangement is based on the appropriate bolt pre-load forces applied to the bolt of the fastener assembly. A wrongly tightened fastener arrangement could lead to failure of the whole connection. Therefore, the appropriate tightening of the fastener arrangement is critical.

To ensure appropriate tightening, known fastener connections are mounted by means of a torque wrench to control the torque that is applied to the bolt. Anyway, it is difficult to ensure that an appropriate torque is applied to the fastener arrangement, since the applied torque depends on the availability and accuracy of the torque wrench as well as on the impact of the frictional forces that occur.

The invention disclosed in DE 38 40 417 A1 relates to a screw-fastening element for fastening separate parts together. The screw-fastening element comprises an actuating part, which can be brought into engagement with a screw-actuating tool, and a screwing part which is arranged concentrically, in the screwing direction, in or around the actuating part, can be rotated in or around the actuating part and is provided with a thread. The actuating part and the screwing part are connected via a coupling part. The coupling part is in the form of a platelet and is arranged in a groove which runs, transversely to the contact surface of screwing part and actuating part, in said two parts. In the case of a torque which exceeds the shearing strength and is applied on the actuating part, the platelet is sheared off and the rotationally fixed connection of actuating part and screwing part is released. The screw-fastening element may be designed as a screw or as a nut.

### Disclosure of the Invention

The problem to be solved by the present invention is therefore to provide a fastener arrangement that overcomes the disadvantages of the state of the art and allows to control the tightening of a fastener arrangement substantially independently of friction forces between the individual parts of the fastener arrangement and independently of the availability of a ratchet or torque wrench.

This problem is solved by the subjects of the independent claims.

Accordingly, a first aspect of the invention concerns a fastener arrangement for establishing a screw connection. The fastener arrangement comprises a main body and a driving element. The main body has a central axis as well as a head and a shaft. The shaft protrudes from the lower side of the head in a direction of the central axis. At the end of the shaft that faces away from the head, the shaft is threaded. The driving element is penetrated by the shaft and is abutting with its upper end to the lower side of the head.

The driving element positively engages with the main body in a rotational direction around the central axis in screw-in direction of the thread.

In addition, the positive engagement between the main body and the driving element is designed such that if a first shaft section of the main body that penetrates the driving element lengthens to a certain extent in the intended use of the fastener arrangement, the positive engagement is released.

This feature has the technical effect that the fastener arrangement is tightened with a defined pre-load defined by the load that is required to lengthen the first shaft section.

In an advantageous embodiment of the invention, the head of the main body comprises a contour, advantageously a non-rotational symmetrical contour, formed for positively engaging with a tool. Advantageously, the contour has the form of a hexagon or torx socket. Therefore, it is formed for positively engaging with a tool, such that a torque can be applied along the central axis in a rotational direction that is opposite to the screw-in direction of the thread. Such formation of the head of the main body allows to release the fastener arrangement when it is mounted as a fastener in its intended use.

In an advantageous embodiment of the invention, the shaft of the main body is partitioned into three shaft sections. The first shaft section is the section penetrating the driving element and adjacent to the head of the main body. A second shaft section is adjacent to the first section in a direction along the central axis directed away from the head. A third section is adjacent to the second section in a direction of the central axis away from the head, wherein the third section comprises the thread.

In a further advantageous embodiment of the fastener arrangement, the diameter of the first shaft section of the main body is smaller than the diameter of the head of the main body.

Advantageously, the diameter of the second shaft section of the main body has a larger diameter than the diameter of the first shaft section.

Advantageously, the diameter of the head is larger than the diameter of the second shaft section.

In a further advantageous embodiment of the invention, the lengthening of the first shaft section must be at least 0.4mm, advantageously 0.5mm, for releasing the positive engagement between the main body and the driving element.

In a further embodiment of the invention, the positive engagement between the driving element and the main body is formed by means of the driving element that engage with means of the main body.

Advantageously, the form of the means of the driving element and the form of the means of the main body interlock in positive engagement. Such means can have various forms as long as the means of the main body and the means of the driving element are formed counterwise.

In an advantageous embodiment of the invention, the means of the main body are formed as splined rim for engagement with a counter-splined rim of the driving element.

In particular, one spline section refers to a section of each splined rim that repeatedly occurs in radial direction of the respective spline.

Advantageously, each splined rim comprises at least two spline sections, very advantageously comprises at least three spline sections. In another embodiment, each splined rim could comprises more than five spline sections.

Advantageously, the spline rim of the main body or of the driving element have at least one spline section with a height of at least 0.4mm, advantageously 0.5mm.

Advantageously, the spline rim of the main body or of the driving element have at least one spline section with a flank angle of at least 90°, advantageously of essentially 90°. Each spline has two flanks. Therefore, the flank angle can be essentially 90° to only one flank of the spline or to both flanks.

In a further advantageous embodiment of the fastener arrangement, the thread extends at least over one third of the length of the shaft. Advantageously, it extends over a maximum of the half of the length of the shaft. The end of the thread can be flat as for a bolt or can have a sharp tip, as it is used for a self-tapping thread.

Advantageously, the main body and the driving element are made of the same material.

Advantageously, the fastener arrangement is made of a material with properties that allow the material to lengthen by at least 0.1% without bursting of the material.

In an advantageous embodiment of the fastener arrangement, the driving element has a driving contour for positive engagement of a wrench or similar tool. Advantageously, such contour is a hexagonal contour, but can also have any other contoured shape, e.g. is formed as square neck.

A second aspect of the invention refers to a first method for manufacturing of the fastener arrangement according to the first aspect of the invention by means of additive manufacturing. Therefore, the main body and the driving element might be manufactured individually by additive manufacturing and subsequently might be assembled. But the method of additive manufacturing allows furthermore to manufacture the whole assembled fastener arrangement in one manufacturing step, e.g. by printing the fastener arrangement with the main body and the driving element already assembled with each other.

A second method for manufacturing of the fastener arrangement according to the first aspect of the invention comprises the step of forming the main body and the driving element by means of injection moulding.

A third method for manufacturing of the fastener arrangement according to the first aspect of the invention comprises the steps of cold forming of the main body and the driving element. Advantageously, wherein the assembly of the two, the main body and the driving element, is further performed by means the cold forming method.

A third aspect of the invention refers to a use of the fastener arrangement for establishing a screw-connection.

Other advantageous embodiments are listed in the dependent claims as well as in the description below.

### Brief Description of the Drawings

The invention will be better understood and objects other than those set forth above will become apparent from the following detailed description thereof. Such description refers to the annexed drawings, wherein:
Fig. 1 shows a three-dimensional view of an advantageous embodiment of the fastener arrangement;
Fig. 2 shows a cross section of the advantageous embodiment of the fastener arrangement of Fig. 1;
Fig. 3a shows a detailed view of an advantageous embodiment of the means of the main body and the means of the driving element in positive engagement; and
Fig. 3b shows a detailed view of the advantageous embodiment of Fig. 3a wherein the positive engagement is released.

### Modes for Carrying Out the Invention

The Figures show different views of an advantageous embodiment of the present invention.

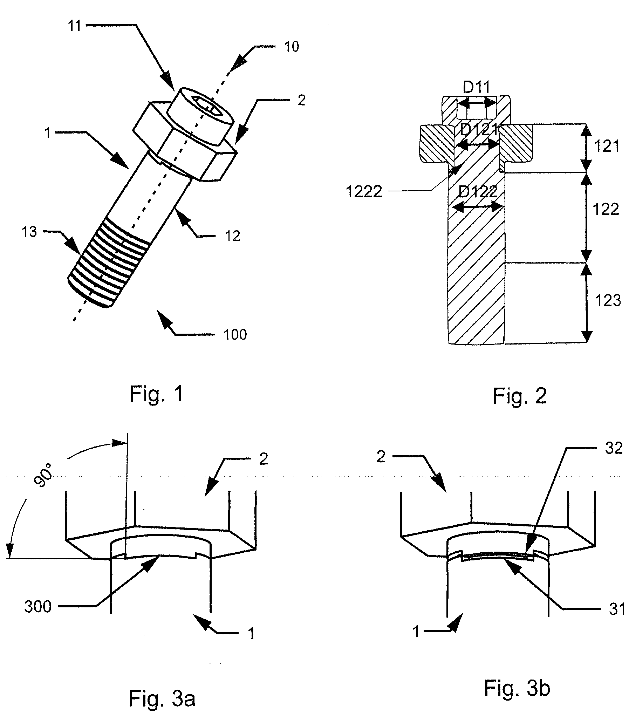

The advantageous fastener arrangement 100 as shown in Fig. 1 comprises a main body 1 and a driving element 2. The main body 1 has a central axis 10.

The advantageous fastener arrangement is shown in Fig. 1 in a three dimensional view and in Fig. 2 in a sectional view through the central axis.

The main body 1 comprises a head 11 and a shaft 12 protruding from the lower side of the head in direction of the central axis 10 and having at its end facing away from the head 10 a thread 13 or threaded third shaft section 123 respectively.

The fastener arrangement 100 comprises further a driving element 2 that is penetrated by the shaft 12 and that is abutting with an upper end against the lower side of the head 11. The driving element 2 positively engages with the main body 1 in a rotational direction around the central axis 10 in screw-in direction of the thread 13.

The fastener arrangement is formed such that a first shaft section 121 of the main body 1 penetrates the driving element 2. The positive engagement between the main body 1 and the driving element 2 is designed such that in the intended use of the fastener arrangement, the first shaft section 121 lengthens to a certain extent, such that the positive engagement is released.

As shown in Fig. 1 and 2, the head 11 of the main body 1 has the form of a torx socket to provide a non-rotational symmetrical contour, to receive a torque that is applied with a respective torx wrench along the central axis 10 in a rotational direction opposite to the screw-in direction of the thread 13. Such specific form of the head 11 is only shown as an advantageous embodiment of the invention. The head 11 can have any other form that provides the same technical functionality.

As visible from Fig. 2, the diameter D121 of the first shaft section 121 of the main body 1 is smaller than the diameter D11 of the head 11 of the main body 1 and the diameter D122 of a second shaft section 122 of the main body 1. In the shown advantageous embodiment, the diameter D11 of the head 11 is larger than the diameter D122 of the second shaft section 122. This feature is only advantageous and embodiments with a diameter D11 of the head 11 that is equal the diameter 122 of the second shaft section 122 are possible.

Fig. 3a and 3b show an advantageous embodiment of means 31 of the main body 1 and of means 32 of the driving element 2 that are formed for positive engagement of the two. The advantageous means 31 of the main body 1 are formed as splined rim 31. The advantageous means 32 of the driving element 2 are formed as counter-splined rim 32. Therefore, the splined rim 31 of the main body 1 and the counter-splined rim 32 of the driving element are positively engaged in Fig. 3a before brought into the intended use of the fastener arrangement. In the intended use of the fastener arrangement, the splined rim 31 and the counter-splined rim 32 are resolved from their positive engagement due to the lengthening of the first shaft section 121 as shown in Fig. 3b.

One spline section refers to a section of each splined rim 31, 32 that repeatedly occurs in radial direction of the respective splined rim 31, 32 as shown in Fig. 3a. The advantageous embodiment as shown in Fig. 3a and 3b. comprise three spline sections 300 each.

The spline sections as shown in Fig. 3a and 3b have a flank angle α of at least 90°, in particular of essentially 90°.

As shown in Fig. 1 and 2, the thread 13 of the shaft 12 extends over about one third of the length of the shaft 12.

Advantageously, the advantageous embodiment as shown in the Figures is made of a material selected from the group consisting of steel, aluminum, plastic, titan, copper tin alloy, and brazen.

As shown in Fig. 1 and 2, the driving element has an outer hexagonal contour for positive engagement of a wrench. This in only one example of an advantageous contour and any other contour that allows a positive engagement of a wrench is possible.

## Claims

1. A fastener arrangement (100) for establishing a screw-connection comprising
- a main body (1) with a central axis (10) having
o a head (11) and
o a shaft (12) protruding from the lower side of the head in direction of the central axis (10), and having at its end facing away from the head (10) a thread (13),
- a driving element (2) penetrated by the shaft (12) and abutting with an upper end against the lower side of the head (11),
wherein the driving element (2) positively engages with the main body (1) in a rotational direction around the central axis (10) in screw-in direction of the thread (13), and
wherein the positive engagement between the main body (1) and the driving element (2) is designed such that if a first shaft section (121) of the main body (1) that penetrates the driving element (2) lengthens to a certain extent in the indented use of the fastener arrangement (100), the positive engagement is released.

2. Fastener arrangement (100) according to claim 1,
wherein the head (11) of the main body (1) comprises a contour for positive engagement of a tool for applying a torque along the central axis (10) in a rotational direction opposite to the screw-in direction of the thread (13).

3. Fastener arrangement (100) according to one of the preceding claims,
wherein the diameter (D121) of the first shaft section (121) of the main body (1) is smaller than the diameter (D11) of the head (11) of the main body (1), and/or the diameter (D122) of a second shaft section (122) of the main body (1), and/or
wherein the diameter (D11) of the head (11) is larger than the diameter (D122) of the second shaft section (122).

4. Fastener arrangement (100) according to one of the preceding claims, wherein for releasing the positive engagement between the main body (1) and the driving element (2) the lengthening of the first shaft section (121) must be at least 0.4mm, in particular at least 0.5mm.

5. Fastener arrangement (100) according to one of the preceding claims,
wherein the positive engagement between the driving element (2) and the main body (1) is formed by means of the driving element (2) that engage with means of the main body (1).

6. Fastener arrangement (100) according to claim 5, wherein the means of the main body (1) are formed as splined rim (31) for engagement with a counter-splined rim (32) of the driving element (2), in particular wherein the splined rim (31) comprises at least two spline sections (300), very particular wherein the splined rim (32) comprises at least three spline sections (300) .

7. Fastener arrangement (100) according to claim 6, wherein at least one spline section (300) has a height of at least 0.4mm, in particular at least 0.5mm, and/or wherein at least one spline section (300) has a flank angle (α) of essentially 90°.

8. Fastener arrangement (100) according to one of the preceding claims wherein the thread (13) extends at least over one third of the length of the shaft (12) and/or at maximum over half of the length of the shaft (12).

9. Fastener arrangement (100) according to one of the preceding claims wherein the main body (1) and the driving element (2) are made of the same material.

10. Fastener arrangement (100) according to one of the preceding claims, wherein the lengthening of the material is at least 0.1%.

11. Fastener arrangement (100) according to anyone of the preceding claims, wherein the driving element (2) has a driving contour, in particular an outer hexagonal contour for positive engagement of a wrench.

12. Method for manufacturing the fastener arrangement (100) according to one of the preceding claims by the method of additive manufacturing.

13. Method for manufacturing the fastener arrangement (100) according to one of claims 1 to 11 comprising the step of forming the main body (1) and the driving element (2) by means of injection moulding.

14. Method for manufacturing the fastener arrangement (100) according to one of claims 1 to 11 comprising the steps of
- cold forming of the main body (1) and the driving element (2), and subsequent
- cold-forming of the assembly of the main body (1) and the driving element (2) to the fastener arrangement (100).

15. Use of the fastener arrangement (100) according to claims 1 to 11 for establishing a screw-connection.

## Patentansprüche

1. Eine Befestigungsmittelanordnung (100) zur Herstellung einer Schraubverbindung, umfassend
- einen Hauptkörper (1) mit einer zentralen Achse (10) mit
o einem Kopf (11) und
o einem von der Unterseite des Kopfes in Richtung der Mittelachse (10) ragenden Schaft (12), der an seinem vom Kopf (10) abgewandten Ende ein Gewinde (13) aufweist,
- ein Antriebselement (2), das von dem Schaft (12) durchdrungen ist und mit einem oberen Ende an der Unterseite des Kopfes (11) anliegt,
wobei das Antriebselement (2) in einer Drehrichtung um die Mittelachse (10) in Einschraubrichtung des Gewindes (13) formschlüssig in den Hauptkörper (1) eingreift, und
wobei der Formschluss zwischen dem Hauptkörper (1) und dem Antriebselement (2) so ausgebildet ist, dass bei einer gewissen Verlängerung eines ersten, das Antriebselement (2) durchdringenden Schaftabschnitts (121) des Hauptkörpers (1) bei bestimmungsgemässer Verwendung der Befestigungsmittelanordnung (100) der Formschluss gelöst wird.

2. Befestigungsmittelanordnung (100) nach Anspruch 1,
wobei der Kopf (11) des Hauptkörpers (1) eine Kontur zum formschlüssigen Eingriff eines Werkzeugs zum Aufbringen eines Drehmoments entlang der Mittelachse (10) in einer zur Einschraubrichtung des Gewindes (13) entgegengesetzten Drehrichtung aufweist.

3. Befestigungsmittelanordnung (100) nach einem der vorangehenden Ansprüche,
wobei der Durchmesser (D121) des ersten Schaftabschnitts (121) des Hauptkörpers (1) kleiner ist als der Durchmesser (D11) des Kopfes (11) des Hauptkörpers (1), und/oder der Durchmesser (D122) eines zweiten Schaftabschnittes (122) des Hauptkörpers (1), und/oder
wobei der Durchmesser (D11) des Kopfes (11) grösser ist als der Durchmesser (D122) des zweiten Schaftabschnitts (122).

4. Befestigungsmittelanordnung (100) nach einem der vorangehenden Ansprüche, wobei zum Lösen des Formschlusses zwischen dem Hauptkörper (1) und dem Antriebselement (2) die Verlängerung des ersten Schaftabschnitts (121) mindestens 0,4 mm, insbesondere mindestens 0,5 mm betragen muss.

5. Befestigungsmittelanordnung (100) nach einem der vorangehenden Ansprüche,
wobei der Formschluss zwischen dem Antriebselement (2) und dem Hauptkörper (1) durch Mittel des Antriebselements (2) gebildet wird, die mit Mitteln des Hauptkörpers (1) in Eingriff stehen.

6. Befestigungsmittelanordnung (100) nach Anspruch 5, wobei die Mittel des Hauptkörpers (1) als Keilkranz (31) zum Eingriff mit einem gegenverzahnten Keilkranz (32) des Antriebselements (2) ausgebildet sind, insbesondere wobei der Keilkranz (31) mindestens zwei Keilabschnitte (300) aufweist, ganz besonders wobei der Keilkranz (32) mindestens drei Keilabschnitte (300) aufweist.

7. Befestigungsmittelanordnung (100) nach Anspruch 6, wobei mindestens ein Keilabschnitt (300) eine Höhe von mindestens 0,4 mm, insbesondere von mindestens 0,5 mm, aufweist und/oder wobei mindestens ein Keilabschnitt (300) einen Flankenwinkel (α) von im Wesentlichen 90° aufweist.

8. Befestigungsmittelanordnung (100) nach einem der vorangehenden Ansprüche, wobei sich das Gewinde (13) mindestens über ein Drittel der Länge des Schafts (12) und/oder maximal über die Hälfte der Länge des Schafts (12) erstreckt.

9. Befestigungsmittelanordnung (100) nach einem der vorangehenden Ansprüche, wobei der Hauptkörper (1) und das Antriebselement (2) aus demselben Material bestehen.

10. Befestigungsmittelanordnung (100) nach einem der vorangehenden Ansprüche, wobei die Verlängerung des Materials mindestens 0,1 % beträgt.

11. Befestigungsmittelanordnung (100) nach einem der vorangehenden Ansprüche, wobei das Antriebselement (2) eine Antriebskontur, insbesondere eine Aussensechskantkontur zum formschlüssigen Eingriff eines Schraubenschlüssels aufweist.

12. Verfahren zur Herstellung der Befestigungsmittelanordnung (100) nach einem der vorangehenden Ansprüche durch das Verfahren der additiven Fertigung.

13. Verfahren zur Herstellung der Befestigungsmittelanordnung (100) nach einem der Ansprüche 1 bis 11, umfassend den Schritt des Ausbildens des Hauptkörpers (1) und des Antriebselements (2) mittels Spritzguss.

14. Verfahren zur Herstellung der Befestigungsmittelanordnung (100) nach einem der Ansprüche 1 bis 11, umfassend die Schritte
- Kaltverformen des Hauptkörpers (1) und des Antriebselements (2), und anschliessend
- Kaltverformen des Zusammenbaus von Hauptkörper (1) und Antriebselement (2) zur Befestigungsmittelanordnung (100).

15. Verwendung der Befestigungsmittelanordnung (100) nach einem der Ansprüche 1 bis 11 zur Herstellung einer Schraubverbindung.

## Revendications

1. Un ensemble de fixation (100) pour réaliser une connexion filetée comprenant
- un corps principal (1) ayant un axe central (10) avec
o une tête (11) et
o une tige (12) faisant saillie de la partie inférieure de la tête dans la direction de l'axe central (10), et comportant un filetage (13) à son extrémité éloignée de la tête (10),
- un élément d'entraînement (2) qui est pénétré par la tige (12) et repose avec une extrémité supérieure contre la face inférieure de la tête (11),
dans lequel l'élément d'entraînement (2) s'engage positivement dans le corps principal (1) dans un sens de rotation autour de l'axe central (10) dans le sens de vissage du filet (13), et
dans lequel l'engagement positif entre le corps principal (1) et l'élément d'entraînement (2) est conçu de telle sorte que l'engagement positif est libéré lorsqu'une première partie de tige (121) du corps principal (1) pénétrant dans l'élément d'entraînement (2) est étendue dans une certaine mesure lorsque l'ensemble de fixation (100) est utilisé de manière conforme.

2. Ensemble de fixation (100) selon la revendication 1,
dans lequel la tête (11) du corps principal (1) a un contour pour un engagement positif d'un outil pour appliquer un couple le long de l'axe central (10) dans une direction de rotation opposée à la direction de vissage du filet (13).

3. Ensemble de fixation (100) selon l'une des revendications précédentes,
dans lequel le diamètre (D121) de la première partie de tige (121) du corps principal (1) est plus petit que le diamètre (D11) de la tête (11) du corps principal (1), et/ou le diamètre (D122) d'une seconde partie de tige (122) du corps principal (1), et/ou
dans lequel le diamètre (D11) de la tête (11) est supérieur au diamètre (D122) de la seconde partie de tige (122).

4. Ensemble de fixation (100) selon l'une des revendications précédentes, dans lequel l'extension de la première partie de tige (121) doit être d'au moins 0,4 mm, en particulier d'au moins 0,5 mm, afin de libérer l'engagement positif entre le corps principal (1) et l'élément d'entraînement (2).

5. Ensemble de fixation (100) selon l'une des revendications précédentes,
dans lequel l'engagement positif entre l'élément d'entraînement (2) et le corps principal (1) est formée au moyen de l'élément d'entraînement (2) s'engageant avec des moyens du corps principal (1).

6. Ensemble de fixation (100) selon la revendication 5, dans lequel les moyens du corps principal (1) sont réalisés sous la forme d'une bague cunéiforme (31) destinée à s'engager dans une bague cunéiforme (32) à contre-denture de l'élément d'entraînement (2), en particulier dans lequel la bague cunéiforme (31) présente au moins deux sections cunéiformes (300), très particulièrement dans lequel la bague cunéiforme (32) présente au moins trois sections cunéiformes (300).

7. Ensemble de fixation (100) selon la revendication 6, dans lequel au moins une section cunéiforme (300) a une hauteur d'au moins 0,4 mm, en particulier d'au moins 0,5 mm, et/ou dans lequel au moins une section cunéiforme (300) a un angle de flanc (α) de sensiblement 90°.

8. Ensemble de fixation (100) selon l'une des revendications précédentes, dans lequel le filet (13) s'étend au moins sur un tiers de la longueur de la tige (12) et/ou au plus sur la moitié de la longueur de la tige (12).

9. Ensemble de fixation (100) selon l'une des revendications précédentes, dans lequel le corps principal (1) et l'élément d'entraînement (2) sont réalisés dans le même matériau.

10. Ensemble de fixation (100) selon l'une des revendications précédentes, dans lequel l'allongement du matériau est d'au moins 0,1%.

11. Ensemble de fixation (100) selon l'une des revendications précédentes, dans lequel l'élément d'entraînement (2) présente un contour d'entraînement, notamment un contour hexagonal extérieur pour l'engagement positif d'une clé.

12. Procédé de fabrication de l'ensemble de fixation (100) selon l'une des revendications précédentes par le procédé de fabrication additive.

13. Procédé de fabrication de l'ensemble de fixation (100) selon l'une des revendications 1 à 11, comprenant l'étape consistant à former le corps principal (1) et l'élément d'entraînement (2) par moulage par injection.

14. Procédé de fabrication de l'ensemble de fixation (100) selon l'une des revendications 1 à 11, comprenant les étapes suivantes
- Former à froid le corps principal (1) et de l'élément d'entraînement (2), ensuite
- Former à froid l'ensemble du corps principal (1) et de l'élément d'entraînement (2) pour former l'ensemble de fixation (100).

15. Utilisation de l'ensemble de fixation (100) selon l'une des revendications 1 à 11 pour la réalisation d'un assemblage vissé.
